# EUROPÄISCHE PATENTSCHRIFT

(11) **EP 2 929 210 B1**
(45) Veröffentlichungstag und Bekanntmachung des Hinweises auf die Patenterteilung: **20.06.2018**
(21) Anmeldenummer: 13799288.9
(22) Anmeldetag: 02.12.2013
(51) Int. Cl.: F16F 9/32

(54) **STOSSDÄMPFER FÜR EIN FAHRZEUG MIT EINEM FLANSCH ZUR VERBINDUNG EINES EXTERNEN MODULROHRES**
DAMPER FOR A VEHICLE HAVING A FLANGE FOR CONNECTING AN EXTERNAL MODULE TUBE
AMORTISSEUR POUR VÉHICULE MUNI D'UNE BRIDE DE RACCORDEMENT À UN TUBE DE MODULE EXTERNE

(30) Priorität: 07.12.2012 DE 102012111936
(43) Veröffentlichungstag der Anmeldung: 14.10.2015
(73) Patentinhaber: ThyssenKrupp Bilstein GmbH, 58256 Ennepetal (DE)
(72) Erfinder: SCHMIDT, Klaus, 51519 Odenthal (DE); GÖTZ, Ole, 38112 Braunschweig (DE); WOENARTA,Freddy, 38116 Braunschweig (DE)
(74) Vertreter: thyssenkrupp Intellectual Property GmbH
(86) Internationale Anmeldenummer: PCT/EP2013/075240
(87) Internationale Veröffentlichungsnummer: WO 2014/086713

(56) Entgegenhaltungen:
- EP-A2- 1 508 723
- WO-A1-2009/081363
- DE-A1- 10 355 151
- JP-A- H0 791 478

## Beschreibung

Die vorliegende Erfindung betrifft einen Stoßdämpfer mit einem Stoßdämpferrohr und mit einem externen Modulrohr, das mittels einem Flansch außenseitig am Stoßdämpferrohr haltend angeordnet ist, wobei der Flansch einen oder mehrere Fluidkanäle aufweist, die das Modulrohr mit dem Stoßdämpferrohr fluidisch koppeln.

### STAND DER TECHNIK

Aus der DE 11 2007 002 377 T5 ist beispielsweise ein Stoßdämpfer mit einem Stoßdämpferrohr bekannt, und es ist ein externes Modulrohr vorgesehen, in dem eine weitere Ventilanordnung aufgenommen ist. Das Modulrohr erstreckt sich dabei senkrecht zum Stoßdämpferrohr, und der Flansch zur Verbindung des Modulrohres mit dem Stoßdämpferrohr ist durch das Modulrohr selbst gebildet.

Aus der DE 11 2008 001 980 T5 ist ein Stoßdämpfer mit einem Stoßdämpferrohr und mit einem externen Modulrohr bekannt, in dem eine Ventilkörperanordnung aufgenommen ist. Zwischen dem Stoßdämpferrohr und dem Modulrohr befinden sich Transferringe, die einen Flansch zwischen den beiden Rohren bilden und über die das Modulrohr am Stoßdämpferrohr haltend angebracht ist. Durch die Transferringe hindurch sind Fluidkanäle gebildet, um die Ventiikörperanordnung im externen Modulrohr mit dem Stoßdämpferrohr zu verbinden. Dabei ist der maximal mögliche Abstand des Modulrohres vom Stoßdämpferrohr durch die Ausführung der Transferringe baulich begrenzt.

Die Verbindung zwischen dem Modulrohr und dem Stoßdämpferrohr muss neben der fluidischen Verbindungsfunktion eine mechanische Haltefunktion erfüllen. Dabei ist eine große mechanische Festigkeit des Modulrohres am Stoßdämpferrohr gefordert, und wenn der Abstand zwischen dem Modulrohr und dem Stoßdämpferrohr beispielsweise aus baulichen Gründen vergrößert werden muss, kann die Flanschverbindung zwischen dem Modulrohr und dem Stoßdämpferrohr nicht mehr durch Transferringe gebildet werden, da diese mechanisch nicht mehr hinreichend belastbar sind.

Zwar kann ein Flansch aus einem metallischen Werkstoff bereitgestellt werden, der eine hohe Festigkeit zwischen dem Modulrohr und dem Stoßdämpferrohr ermöglicht, insbesondere dann, wenn die Rohre mit dem Flansch verschweißt werden, jedoch kann ein Flansch beispielsweise aus einem metallischen Vollmaterial schnell ein hohes Gewicht aufweisen. Insbesondere dann, wenn Stoßdämpferrohre als ungefederte Massen an einem Fahrzeug Verwendung finden, ist es wichtig, ein geringes Gewicht des Stoßdämpfers zu erreichen. Ein Flansch aus einem Kunststoffmaterial wäre zwar leichter, dieser würde aber die geforderte Festigkeit nicht erreichen, und das Modulrohr wäre am Stoßdämpferrohr mechanisch nicht hinreichend fest angebracht.

Wird beispielsweise ein Flansch aus einem metallischen Vollmaterial bereitgestellt, so ergibt sich ferner das Problem der Abdichtung der Fluidkanäle zu den Rohrkörpern. Die Fluidkanäle müssen den Flansch durchwandern und mit Öffnungen in Verbindung gebracht werden, die im Stoßdämpferrohr und im Modulrohr eingebracht sind. Wird die Verbindung zwischen dem Flansch und den Rohren durch eine Schweißverbindung gebildet, entsteht die Schwierigkeit der Abdichtung zwischen den Fluidkanälen im Flansch und den Außenseiten der Rohre.

Aus der DE 103 55 151 A1 ist ein Schwingungsdämpfer mit einem extern angeschlossenen Gehäuse bekannt. bekannt.

In der EP 1 508 723 A2 wird ein Schwingungsdämpfer mit einem außenliegenden Zusatzzylinder offenbart.

In der WO 2009/081363 ist ein Stoßdämpfer mit einem an einem Außenrohr seitlich angeschlossenen rohrförmigen Element offenbart, wobei das Außenrohr mit dem rohrförmigen Element starr verbunden, insbesondere verschweißt ist.

In der JP H 07 91478 A ist ein Stoßdämpfer mit einem an einem Stoßdämpferrohr seitlich angeschlossenen rohrförmigen Element offenbart.

### OFFENBARUNG DER ERFINDUNG

Es ist daher die Aufgabe der vorliegenden Erfindung, einen Stoßdämpfer mit einem Stoßdämpferrohr und mit einem externen Modulrohr zu schaffen, bei dem die Verbindung zwischen dem Modulrohr und dem Stoßdämpferrohr durch einen verbesserten Flansch gebildet ist, der eine mechanisch belastbare Anordnung des Modulrohres am Stoßdämpferrohr ermöglicht und ein geringes Gewicht aufweist. Zudem muss die Aufgabe erfüllt werden, die Fluidkanäle mit dem Stoßdämpferrohr und dem Modulrohr druckdicht zu verbinden.

Diese Aufgabe wird ausgehend von einem Stoßdämpfer gemäß dem Oberbegriff des Anspruches 1 und ausgehend von einem Flansch gemäß dem Oberbegriff des Anspruches 9 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass der Flansch wenigstens einen metallischen Trägerkorb aufweist, durch den eine haltende Verbindung zwischen dem Stoßdämpferrohr und dem Modulrohr gebildet ist, und dass der Flansch wenigstens einen Kunststoffkörper aufweist, in dem der wenigstens eine Fluidkanal zur fluidischen Kopplung des Modulrohres mit dem Stoßdämpferrohr ausgebildet ist.

Die Erfindung geht dabei von dem Gedanken aus, einen Flansch zwischen einem Stoßdämpferrohr und einem externen Modulrohr zu schaffen, der zur mechanisch belastbaren Verbindung der beiden Rohre einen metallischen Trägerkorb aufweist, und zur fluidischen Verbindung der beiden Rohre sind Fluidkanäle vorgesehen, die in einem Kunststoffkörper ausgebildet sind. Damit muss der Kunststoffkörper keine mechanischen Haltekräfte aufnehmen, um das Modulrohr mit dem Stoßdämpferrohr zu verbinden, und der Kunststoffkörper kann die Fluidkanäle auf vorteilhafte Weise ausbilden, ohne dass der metallische Trägerkorb zur Bildung der Fluidkanäle optimiert werden muss. Der so gebildete Flansch weist ein geringes Gewicht auf, und der metallische Trägerkorb kann Abmessungen aufweisen, die größer sind als die Abmessungen der Fluidkanäle im Kunststoffkörper. Durch die vergrößerten Abmessungen des metallischen Trägerkorbes entsteht eine verbesserte Belastungssituation, da der mechanisch verbindende Querschnitt zwischen dem Modulrohr und dem Stoßdämpferrohr größere Kippmomente aufnehmen kann. Innerhalb des metallischen Trägerkorbes können ein oder mehrere Fluidkanäle ausgebildet sein, die sich beispielsweise senkrecht zwischen dem Modulrohr und dem Stoßdämpferrohr erstrecken.

Durch die vorteilhafte Ausführungsform des Flansches kann der metallische Trägerkorb auf einfache Weise aus einem durch Umformverfahren hergestellten Blechbauteil gebildet werden. Unter einem Trägerkorb wird dabei vorliegend ein dreidimensionales Gebilde oder ein Gerippe und damit eine Art Korb verstanden, der vorzugsweise aus einem Blechkörper mit einer Blechdicke hergestellt ist, wobei jede Abmessung des Korbes in seinen drei Dimensionen im Raum größer ist als die Blechdicke des Blechkörpers. Der Trägerkorb kann dabei auch mehrteilig sein oder aus mehreren Blechbauteilen zusammengesetzt sein.

Das Blechbauteil kann als plan ausgeführtes Stanzprodukt bereitgestellt werden, welches gemäß einer möglichen Ausführungsform anschließend in eine etwa rechteckige Kastenform gebogen und beispielsweise über zwei aufeinander zu geführte Längskanten mit einer Nahtstelle verschlossen wird. Auch besteht vorteilhaft die Möglichkeit, ein zunächst plan ausgeführtes Stanzprodukt durch Stanz-Biegeoperationen nahtlos in das Gebilde oder Gerippe zu bringen, das anschließend durch ein Kunststoff- Spritzgussverfahren mit dem Material des Kunststoffkörpers umspritzt wird.

Damit ergibt sich eine erste Ausführungsvariante des Flansches, nach der der metallische Trägerkorb den Kunststoffkörper wenigstens teilweise oder vollständig außenseitig umschließt und es ergibt sich eine zweite Ausführungsvariante des Flansches, nach der der metallische Trägerkorb im Kunststoffkörper wenigstens teilweise oder vollständig eingeschlossen und insbesondere vom Material des Kunststoffkörpers umspritzt ist. Mit letzterer Variante ergibt sich insbesondere der Vorteil, dass der metallische Trägerkorb nicht oxidieren kann, da dieser im Wesentlichen vollständig vom Kunststoffkörper umschlossen ist. Umschließt der Trägerkorb den Kunststoffkörper im Wesentlichen vollständig, so ergibt sich der Vorteil einer verbesserten mechanischen Belastbarkeit, da der Flansch zwischen den beiden Rohren durch seine außenseitige Anordnung ein großes Flächenträgheitsmoment bildet, und der Trägerkorb kann mit den Rohren verbessert beispielsweise stoffschlüssig verbunden werden.

Auf ebenso vorteilhafte Weise kann der Kunststoffkörper durch ein Kunststoff-Spritzgussverfahren hergestellt werden, oder der Kunststoffkörper wird aus einem formstabilen Körper bereitgestellt, um den der metallische Trägerkorb angeordnet wird. Auch ist es denkbar, den Kunststoffkörper als Spritzgussbauteil in den metallischen Trägerkorb einzuspritzen oder der Kunststoffkörper wird hergestellt, indem der Trägerkorb vom Kunststoffmaterial umspritzt wird. Dabei können entsprechende Vorkehrungen vorgesehen werden, um die Fluidkanäle in den gespritzten Kunststoffkörper einzubringen.

Die Fluidkanäle können gemäß einer ersten möglichen Ausführungsform durch Durchgänge im Kunststoffkörper selbst gebildet sein. Der Kunststoffkörper kann aus einem faserverstärkten, festen Kunststoff bestehen, beispielsweise aus faserverstärktem Polyamid, und auch bei wechselnden Drücken eines durch die Durchgänge geführten Fluides führt dabei die Druckbelastung aus dem Inneren der Fluidkanäle nicht zur Beschädigung des Kunststoffkörpers. Zwischen dem Kunststoffkörper und dem Stoßdämpferrohr und/oder dem Modulrohr können Dichtelemente zur Dichtung der Durchgänge angeordnet werden. Beispielsweise können die Dichtelemente durch O-Ring-Dichtungen gebildet sein. Dadurch entsteht eine sehr einfache Ausführungsform des Flansches, bei dem die Fluidkanäle durch einfache Durchgänge im Kunststoffkörper gebildet sind. Insbesondere kann der Kunststoffkörper zur Aufnahme der Dichtelemente ausgebildet sein.

Nach einer weiteren vorteilhaften Ausführungsform können die Fluidkanäle durch vorzugsweise metallische Rohrelemente gebildet sein, die im Kunststoffkörper aufgenommen sind. Die Rohrelemente können beispielsweise als Spritzguss-Einlegeteile ausgeführt sein, die mit dem Material des Kunststoffkörpers im Kunststoff-Spritzgussverfahren umspritzt werden können. Alternativ können die Rohrelemente nach Bereitstellung des Kunststoffkörpers in diesen eingeführt werden. Auch zwischen den Rohrelementen und dem Stoßdämpferrohr und/oder dem Modulrohr können Dichtelemente zur Dichtung des Übergangs zwischen den Rohrelementen und dem Stoßdämpferrohr beziehungsweise dem Modulrohr angeordnet werden. Werden metallische Rohrelemente verwendet, können diese druckfester ausgeführt sein als Durchgänge im Kunststoffkörper, und metallische Rohrelemente zur Bildung der Fluidkanäle im Kunststoffkörper können beispielsweise dann vorgesehen werden, wenn ein Fluid mit hohen Drücken durch die Fluidkanäle geführt werden muss oder wenn bevorzugt ein weiches Material zur Bildung des Kunststoffkörpers gewählt wird.

Die Rohrelemente können nach einer alternativen Ausführungsform auch vor dem Spritzgießen des Kunststoffkörpers mit dem Trägerkorb verbunden, also beispielsweise in diesem eingeschweißt werden.

Gemäß einer weiteren vorteilhaften Ausführungsform kann der metallische Trägerkorb mit dem Stoßdämpferrohr und mit dem Modulrohr verschweißt werden. Alternativ zum Verschweißen des Trägerkorbes an das Stoßdämpferrohr und/oder an das Modulrohr kann der metallische Trägerkorb mit den Rohren verlötet werden. Ebenso sind Möglichkeiten der Verschraubung oder sonstigen form- oder kraftschlüssigen Verbindungen möglich, und aufgrund der großen Querschnittsabmessungen des Trägerkorbes entstehen keine lokal hohen Belastungen in der Verbindung zwischen dem Trägerkorb und dem Stoßdämpferrohr beziehungsweise dem Modulrohr.

Nach einer noch weiteren Ausführungsform kann wenigstens eine Schelle, eine Manschette oder dergleichen vorgesehen sein, durch die das Stoßdämpferrohr und das Modulrohr gemeinsam umschlossen werden, und bei einem Verspannen der Schelle oder des Flansches können die Rohre auf die jeweiligen den Rohren zugewandten Anlageseiten des Flansches gepresst werden. Auch dadurch kann eine mechanisch belastbare und fluiddichte Anordnung eines Flansches zwischen dem Stoßdämpferrohr und dem Modulrohr gebildet werden, und eine beispielsweise stoffschlüssige Verbindung zwischen dem Flansch und den Rohren kann entfallen.

Die vorliegende Erfindung richtet sich ferner auf einen Flansch zur Verbindung eines Stoßdämpferrohres mit einem externen Modulrohr eines Stoßdämpfers, wobei der Flansch einen oder mehrere Fluidkanäle aufweist, durch die das Modulrohr mit dem Stoßdämpferrohr fluidisch koppelbar ist, und es ist wenigstens ein metallischer Trägerkorb vorgesehen, durch den die haltende Verbindung zwischen dem Stoßdämpferrohr und dem Modulrohr gebildet ist, weiterhin ist ein Kunststoffkörper vorgesehen, in dem der wenigstens eine Fluidkanal zur fluidischen Kopplung des Modulrohres mit dem Stoßdämpferrohr ausgebildet ist. Die in Zusammenhang mit dem Stoßdämpfer vorstehend beschriebenen weiteren Merkmale und zugeordneten Vorteile finden für den erfindungsgemäßen Flansch selbstverständlich gleichermaßen Berücksichtigung.

Insbesondere können die Fluidkanäle durch Durchgänge im Kunststoffkörper des Flansches gebildet sein, alternativ können im Kunststoffkörper vorzugsweise metallische Rohrelemente angeordnet sein, durch die die Fluidkanäle gebildet sind. Der metallische Trägerkorb kann mit weiterem Vorteil aus einem durch Umformverfahren hergestellten Blechbauteil gebildet werden und/oder es kann vorgesehen sein, dass der Kunststoffkörper durch ein Kunststoff-Spritzgussverfahren hergestellt wird.

Insbesondere dann, wenn der metallische Trägerkorb stoffschlüssig, formschlüssig oder kraftschlüssig mit dem Stoßdämpferrohr und/oder mit dem Modulrohr verbunden wird, erfolgt zugleich eine Verbindung der Durchgänge im Kunststoffkörper oder der Rohrelemente mit Öffnungen, die im Stoßdämpferrohr und/oder im Modulrohr eingebracht sind. Die Öffnungen bilden fensterartige Durchgänge in den Innenraum des Stoßdämpferrohres und/oder des Modulrohres, und zwischen den Durchgängen und/oder den Rohrelementen im Kunststoffkörper und den Öffnungen im Stoßdämpferrohr und/oder im Modulrohr können Dichtelemente eingebracht sein. Wird folglich der Trägerkorb mit dem Stoßdämpferrohr und dem Modulrohr verbunden, kann durch die Dichtelemente zugleich eine druckdichte Verbindung der Fluidkanäle im Kunststoffkörper mit den Rohren erfolgen. Beispielsweise kann durch eine Vorrichtung das Stoßdämpferrohr und das Modulrohr an jeweiligen Aufnahmeseiten am Flansch angepresst werden, um anschließend den Trägerkorb mit den Rohren zu verschweißen. Dadurch entsteht zugleich die druckdichte Verbindung der Fluidkanäle im Kunststoffkörper mit dem Stoßdämpferrohr und mit dem Modulrohr.

Beispielsweise kann vorgesehen sein, dass der metallische Trägerkorb einen Randbereich zum Schweißen oder gemäß einer alternativen Ausführungsform Verbindungszungen aufweist, mit dem der Trägerkorb mit dem Stoßdämpferrohr und mit dem Modulrohr stoffschlüssig verbindbar, also beispielsweise verlötbar oder verschweißbar ist.

### BEVORZUGTE AUSFÜHRUNGSBEISPIELE DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht eines Stoßdämpfers mit einem Stoßdämpferrohr, einem Modulrohr und einem die Rohre verbindenden Flansch gemäß einer ersten möglichen Ausführungsform,
- Figur 2: eine perspektivische Ansicht des Flansches mit den Merkmalen der vorliegenden Erfindung gemäß der ersten Ausführungsform,
- Figur 3: eine geschnittene Ansicht des Flansches gemäß der ersten Ausführungsform,
- Figur 4: eine perspektivische Ansicht eines Flansches in einer abgewandelten Ausführungsform in teilgeschnittener Ansicht,
- Figur 5: eine perspektivische Ansicht eines Stoßdämpfers mit einem Stoßdämpferrohr, einem Modulrohr und einem die Rohre verbindenden Flansch gemäß einer weiteren möglichen Ausführungsform,
- Figur 6: eine perspektivische Ansicht des Flansches gemäß der weiteren Ausführungsform, wie in Figur 5 gezeigt, wobei der Kunststoffkörper geschnitten dargestellt ist und
- Figur 7: das Ausführungsbeispiel des Flansches gemäß der Figuren 5 und 6 in einer nicht geschnittenen Ansicht.

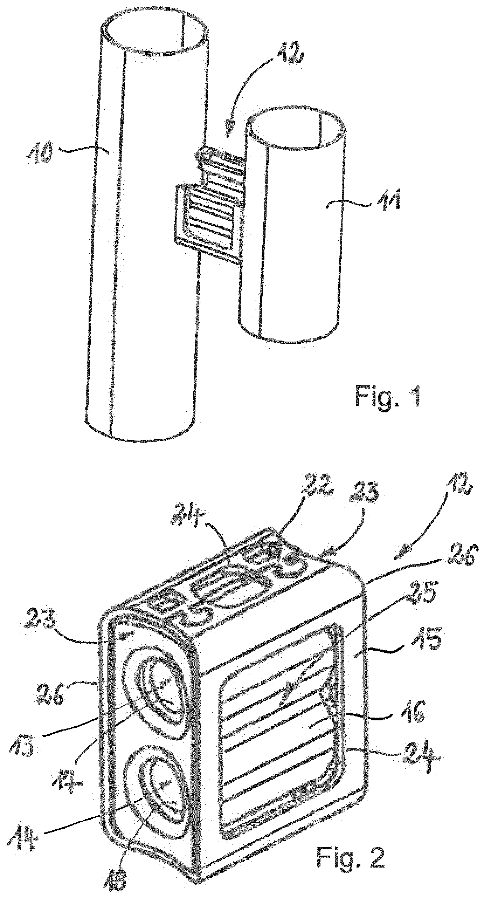

Figur 1 zeigt als ein erstes Ausführungsbeispiel in perspektivischer Ansicht Teile eines Stoßdämpfers mit einem Stoßdämpferrohr 10 und mit einem externen Modulrohr 11, und zwischen dem Stoßdämpferrohr 10 und dem externen Modulrohr 11 ist ein Flansch 12 angeordnet. Der Flansch 12 verbindet das Modulrohr 11 mit dem Stoßdämpferrohr 10, und das Modulrohr 11 ist über den Flansch 12 mechanisch am Stoßdämpferrohr 10 gehalten. Das Stoßdämpferrohr 10 und das Modulrohr 11 sind lediglich schematisch gezeigt, und im Modulrohr 11 kann beispielsweise eine Ventilbaugruppe aufgenommen sein, die über Fluidkanäle im Flansch 12 mit dem Stoßdämpferrohr 10 fluidisch kommuniziert. Alternativ kann im Modulrohr 11 ein zusätzliches Dämpfervolumen ausgebildet sein, welches ebenfalls Fluidkanäle im Flansch 12 erfordert, um mit dem Stoßdämpferrohr 10 fluidisch zu kommunizieren. Das Ausführungsbeispiel des Flansches 12 ist mit der folgenden Figur 2 detailliert dargestellt.

Figur 2 zeigt ein Ausführungsbeispiel eines Flansches 12 zur Verbindung eines Stoßdämpferrohres 10 mit einem externen Modulrohr 11, wie dies in Figur 1 gezeigt ist. Der Flansch 12 weist einen metallischen Trägerkorb 15 auf, in dem ein Kunststoffkörper 16 aufgenommen ist. Der metallische Trägerkorb 15 ist aus einem durch Umformverfahren hergestellten Blechbauteil gebildet, und oberseitig weist das Blechbauteil des Trägerkorbes 15 einen Verbindungsbereich 22 auf. Somit kann das Blechbauteil zunächst aus einem flachen Stanzband bereitgestellt werden, um anschließend in die gezeigte Kastenform gebogen zu werden. Schließlich kann im Verbindungsbereich 22 eine Verbindung der sich gegenüberliegenden Enden des Blechbauteils hergestellt werden, um einen mechanisch belastbaren Trägerkorb 15 bereitzustellen.

In länglicher Richtung ist der Flansch 12 durch Anlageseiten 23 begrenzt, die nach innen gewölbt sind, und die Wölbung ist der Krümmung der Außenseite des Stoßdämpferrohres 10 und des Modulrohres 11 angepasst. Somit können die Anlageseiten 23 den Außenumfang der Rohre 10 und 11 im überdeckenden Bereich umschließen, ohne dass sich ein Spalt zwischen dem Flansch 12 und der Außenseite des Stoßdämpferrohres 10 und/oder des Modulrohres 11 bildet. Zur Verbindung der Rohre 10, 11 an die Anlageseiten 23 weist der metallische Trägerkorb 15 den Rohren 10, 11 zugewandte Randbereiche 26 auf, und eine stoffschlüssige Verbindung kann zwischen den Randbereichen 26 und der Außenoberfläche der Rohre 10, 11 hergestellt werden. Die Randbereiche 26 beranden dabei die Anlageseiten 23 des Flansches 12, sodass beispielsweise eine umlaufende Schweißung im Randbereich 23 die Rohre 10, 11 verbinden kann.

Im Kunststoffkörper 16 sind Fluidkanäle 13 und 14 eingebracht, die durch einfache Durchgänge 17, 18 im Kunststoffkörper 16 ausgebildet sind, sodass das Modulrohr 11 mit dem Stoßdämpferrohr 10 durch die Fluidkanäle 13 und 14 fluidisch kommunizieren kann.

In den Seitenbereichen des metallischen Trägerkorbes 15 sind Fenster 24 eingebracht, durch die eine weitere Verringerung des Gewichtes des Flansches 12 erreicht wird. Ferner weist der Kunststoffkörper 16 eine an die Durchgänge 17 und 18 angepasste Außenkontur 25 auf, durch die ebenfalls eine weitere Optimierung des Gesamtgewichtes des Flansches 12 erreicht wird.

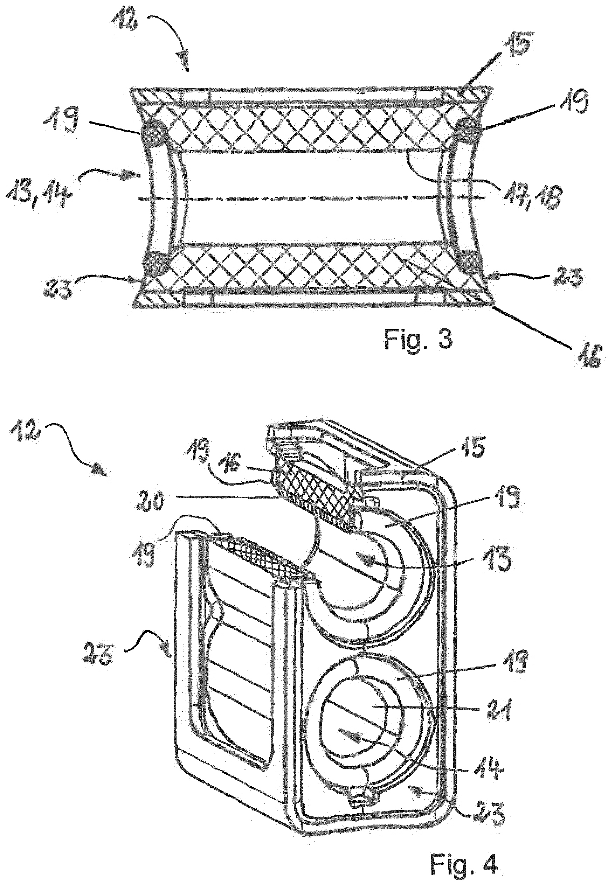

Figur 3 zeigt eine Querschnittsansicht des Ausführungsbeispiels des Flansches 12 gemäß Figur 2. Der Querschnitt läuft entlang eines der Fluidkanäle 13, 14, die durch einfache Durchgänge 17, 18 im Kunststoffkörper 16 ausgebildet sind. Der Kunststoffkörper 16 ist durch den metallischen Trägerkorb 15 eingefasst, der ebenfalls quergeschnitten dargestellt ist. Im Bereich der Anlageseiten 23 sind zur Abdichtung der Fluidkanäle 13, 14 Dichtelemente 19 in Form von O-Ring-Dichtungen eingesetzt. Werden das Stoßdämpferrohr 10 und das Modulrohr 11 an die Anlageseiten 23 des Flansches 12 angeordnet, so erfolgt eine Quetschung der Dichtelemente 19, sodass eine Dichtwirkung zwischen dem Kunststoffkörper 16 und dem Stoßdämpferrohr 10 beziehungsweise dem Modulrohr 11 erzeugt wird.

In Abwandlung zum ersten Ausführungsbeispiel gemäß der Figuren 2 und 3 zeigt das weitere Ausführungsbeispiel gemäß Figur 4 einen Flansch 12 mit einem metallischen Trägerkorb 15, in dem ein Kunststoffkörper 16 aufgenommen ist, und die Fluidkanäle 13, 14 im Kunststoffkörper 16 sind durch Rohrelemente 20, 21 gebildet, die etwa parallel zueinander verlaufen und sich zwischen den Anlageseiten 23 erstrecken. An den Enden der Rohrelemente 20, 21 sind Dichtelemente 19 angeordnet, um bei Anordnung des Stoßdämpferrohres 10 und des Modulrohres 11 an den Anlageseiten 23 eine Dichtwirkung zwischen den Rohrelementen 20 und 21 und dem Stoßdämpferrohr 10 und dem externen Modulrohr 11 zu schaffen.

Der Kunststoffkörper 16 kann beispielsweise aus einem faserverstärkten Polyamid ausgeführt sein, wenn die Fluidkanäle 13 und 14 durch Durchgänge 17 und 18 gebildet sind, die direkt im Kunststoffkörper 16 ausgebildet sind. Ferner kann der Kunststoffkörper 16 aus einem elastischen, beispielsweise gummiartigen Material ausgebildet sein, insbesondere dann, wenn zur Bildung der Fluidkanäle 13, 14 Rohrelemente 20, 21 Verwendung finden. Insbesondere bei Verwendung von Rohrelementen 20, 21 wirkt sich ein fluidischer Druck in den Fluidkanälen 13 und 14 nicht auf den Kunststoffkörper 16 aus, sodass dieser keinen hohen Drücken standhalten muss.

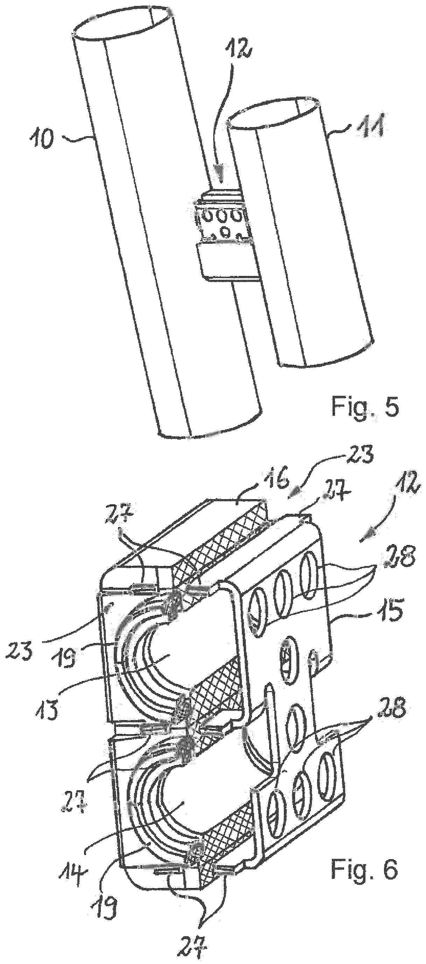

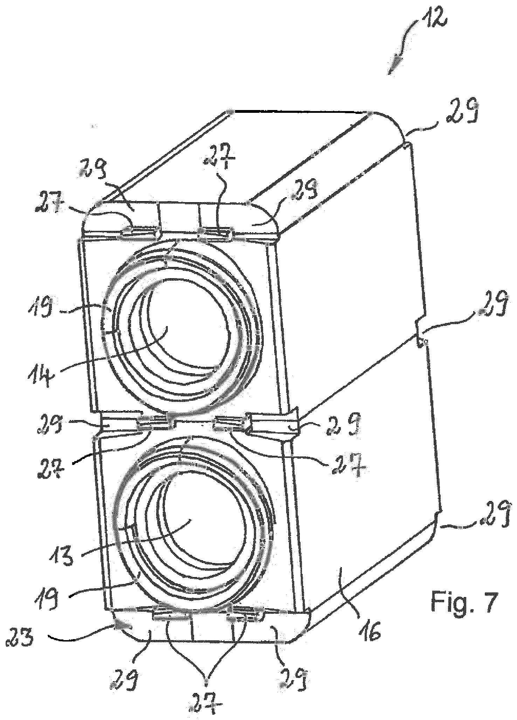

Figur 5 zeigt ein weiteres mögliches Ausführungsbeispiel eines Flansches 12 in perspektivischer Ansicht zwischen einem Stoßdämpferrohr 10 und einem externen Modulrohr 11. Der Flansch 12 verbindet das Modulrohr 11 mit dem Stoßdämpferrohr 10, und das Modulrohr 11 ist über den Flansch 12 mechanisch am Stoßdämpferrohr 10 gehalten, wobei der Aufbau des Flansches 12 in Zusammenhang mit den Figuren 6 und 7 nachfolgend detaillierter beschrieben ist.

Die Figuren 6 und 7 zeigen den Flansch 12 zur Anordnung zwischen einem Stoßdämpferrohr 10 und einem Modulrohr 11 gemäß Figur 5 in einer teilgeschnittenen Ansicht (Figur 6) und in einer vollständigen perspektivischen Außenansicht (Figur 7). Die teilgeschnittene Ansicht gemäß Figur 6 zeigt den Trägerkorb 15 dabei vollständig, und der Kunststoffkörper 16 ist hälftig geschnitten dargestellt, sodass eine offene Hälfte des Trägerkorbes 15 frei sichtbar ist.

Gemäß diesem Ausführungsbeispiel bildet der Trägerkorb 15 ein Einlegebauteil im Kunststoffkörper 16, sodass der Kunststoffkörper 16 den Trägerkorb 15 im Wesentlichen vollständig umschließt. Diese Variante des Flansches 12 ist insbesondere durch ein Spritzgussverfahren vorteilhaft herstellbar, bei dem der metallische Trägerkorb 15 ein Einlegebauteil im Spritzgusswerkzeug bilden kann, und das Material des Kunststoffkörpers 16 wird im Spritzguss um den Trägerkorb 15 herum gespritzt. Zur Gewichtsoptimierung weist der Trägerkorb 15 Aussparungen 28 auf, die beispielhaft als runde Löcher ausgebildet sind und eine ähnlich geartete Gewichtsreduzierung ermöglichen, wie die Fenster 24 im Trägerkorb 15 gemäß dem ersten Ausführungsbeispiel in Figur 2.

Auf der Anlageseite 23 des Flansches 12 zur Ankopplung an die Rohre 10, 11 weist der Trägerkorb 15 Verbindungszungen 27 auf, die auch nach Umspritzen des Kunststoffkörpers 16 um den Trägerkorb 15 aus dem Kunststoffkörper 16 hervorstehen. Die Verbindungszungen 27 dienen dabei zur stoffschlüssigen Anbindung an die Rohre 10, 11 und können beispielsweise an diese angeschweißt werden. Die Schweißung der Verbindungszungen 27 an die Rohre 10, 11 können dabei mittels einem Schweißwerkzeug erfolgen, das über Zugangsöffnungen 29, gezeigt in Figur 7, an die Verbindungszungen 27 herangeführt werden kann. Das Schweißwerkzeug kann beispielsweise durch einen Laserstrahl oder durch eine Schweißelektrode gebildet sein. Ebenfalls ergibt sich vorteilhaft die Möglichkeit, die Schweißverbindung zwischen den Verbindungszungen 27 und den Rohren 10, 11 durch ein Widerstandsschweißverfahren auszuführen.

Die Fluidkanäle 13, 14 können auf gleiche Weise gebildet werden, wie in Zusammenhang mit Figur 3 und in Zusammenhang mit Figur 4 bereits beschrieben. Vorderseitig sind Dichtelemente 19 dargestellt, die in Aufnahmevertiefungen zur Aufnahme derselben eingebracht sind. Die Aufnahmevertiefungen sind dabei im Kunststoffkörper 16 eingebracht und können Nuten umfassen, in die an den Dichtelementen 19 angeformte Nasen einsitzen können, um eine radiale Ausrichtung der Dichtelemente 19 sicherzustellen. Dies kann erforderlich sein, da die Anlageseiten 23 des Flansches 12 der Krümmung der Rohraußenseite der Rohre 10, 11 angepasst sind, wodurch die Dichtelemente 19 eine unterschiedliche Schnurdicke aufweisen können und so der Krümmung der Rohraußenseiten ebenfalls angepasst sind, wodurch diese eine radiale Ausrichtung erfordern.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein.

### Bezuaszeichenliste

- 10: Stoßdämpferrohr
- 11: externes Modulrohr
- 12: Flansch
- 13: Fluidkanal
- 14: Fluidkanal
- 15: metallischer Trägerkorb
- 16: Kunststoffkörper
- 17: Durchgang
- 18: Durchgang
- 19: Dichtelement
- 20: Rohrelement
- 21: Rohrelement
- 22: Verbindungsbereich
- 23: Anlageseite
- 24: Fenster
- 25: angepasste Außenkontur
- 26: Randbereich
- 27: Verbindungszunge
- 28: Aussparung
- 29: Zugangsöffnung

## Patentansprüche

1. Stoßdämpfer mit einem Stoßdämpferrohr (10) und mit einem externen Modulrohr (11), das über einen Flansch (12) mit dem Stoßdämpferrohr (10) verbunden ist, wobei der Flansch (12) einen oder mehrere Fluidkanäle (13, 14) aufweist, die das Modulrohr (11) mit dem Stoßdämpferrohr (10) fluidisch koppeln,
wobei der Flansch (12)
- wenigstens einen metallischen Trägerkorb (15) aufweist, durch den eine haltende Verbindung zwischen dem Stoßdämpferrohr (10) und dem Modulrohr (11) gebildet ist, und wobei der Flansch (12)
- wenigstens einen Kunststoffkörper (16) aufweist, in dem der wenigstens eine Fluidkanal (13, 14) zur fluidischen Kopplung des Modulrohres (11) mit dem Stoßdämpferrohr (10) ausgebildet ist,
**dadurch gekennzeichnet,**
**dass** der metallische Trägerkorb (15) ein in Kastenform gebogener Blechkörper ist,
der den Kunststoffkörper (16) wenigstens teilweise umschließt oder dass der metallische Trägerkorb (15) im Kunststoffkörper (16) wenigstens teilweise eingeschlossen ist.

2. Stoßdämpfer nach Anspruch 1, **dadurch gekennzeichnet, dass** die Fluidkanäle (13, 14) durch Durchgänge (17, 18) im Kunststoffkörper (16) gebildet sind.

3. Stoßdämpfer nach Anspruch 2, **dadurch gekennzeichnet, dass** zwischen dem Kunststoffkörper (16) und dem Stoßdämpferrohr (10) und/oder dem Modulrohr (11) Dichtelemente (19) zur Dichtung der Durchgänge (17, 18) angeordnet sind, insbesondere dass der Kunststoffkörper (16) zur Aufnahme von Dichtelementen (19) ausgebildet ist.

4. Stoßdämpfer nach einem der vorgenannten Ansprüche, **dadurch gekennzeichnet, dass** die Fluidkanäle (13, 14) durch vorzugsweise metallische Rohrelemente (20, 21) gebildet sind, die im Kunststoffkörper (16) aufgenommen sind.

5. Stoßdämpfer nach Anspruch 4, **dadurch gekennzeichnet, dass** zwischen den Rohrelementen (20, 21) und dem Stoßdämpferrohr (10) und/oder dem Modulrohr (11) Dichtelemente (19) zur Dichtung des Übergangs zwischen den Rohrelementen (20, 21) und dem Stoßdämpferrohr (10) bzw. dem Modulrohr (11) angeordnet sind, insbesondere dass der Kunststoffkörper (16) zur Aufnahme von Dichtelementen (19) ausgebildet ist.

6. Stoßdämpfer nach einem der vorgenannten Ansprüche, **dadurch gekennzeichnet, dass** der metallische Trägerkorb (15) mit dem Stoßdämpferrohr (10) und mit dem Modulrohr (11) stoffschlüssig verbunden, insbesondere verschweißt ist.

7. Flansch (12) zur Verbindung eines Stoßdämpferrohres (10) mit einem externen Modulrohr (11) eines Stoßdämpfers, wobei der Flansch (12) einen oder mehrere Fluidkanäle (13, 14) aufweist, durch die das Modulrohr (11) mit dem Stoßdämpferrohr (10) fluidisch koppelbar ist, **gekennzeichnet durch**
- wenigstens einen metallischen Trägerkorb (15), durch den die haltende Verbindung zwischen dem Stoßdämpferrohr (10) und dem Modulrohr (11) gebildet ist, und durch
- einen Spritzguss-Kunststoffkörper (16), in dem der wenigstens eine Fluidkanal (13, 14) zur fluidischen Kopplung des Modulrohres (11) mit dem Stoßdämpferrohr (10) ausgebildet ist, **dadurch gekennzeichnet, dass** der metallische Trägerkorb (15) ein in Kastenform gebogener Blechkörper ist, der den Kunststoffkörper (16) wenigstens teilweise umschließt oder dass der metallische Trägerkorb (15) im Kunststoffkörper (16) wenigstens teilweise eingeschlossen ist.

8. Flansch (12) nach Anspruch 7, **dadurch gekennzeichnet, dass** die Fluidkanäle (13, 14) durch Durchgänge (17, 18) im Kunststoffkörper (16) gebildet sind.

9. Flansch (12) nach Anspruch 7, **dadurch gekennzeichnet, dass** im Kunststoffkörper (16) vorzugsweise metallische Rohrelemente (20, 21) angeordnet sind, durch die die Fluidkanäle (13, 14) gebildet sind.

10. Flansch (12) nach einem der Ansprüche 7 bis 9, **dadurch gekennzeichnet, dass** der metallische Trägerkorb (15) einen Randbereich (26) oder Verbindungszungen (27) aufweist, mit dem der Trägerkorb (15) mit dem Stoßdämpferrohr (10) und mit dem Modulrohr (11) stoffschlüssig verbindbar ist.

## Claims

1. Shock absorber having a shock absorber tube (10) and having an external module tube (11) which is connected to the shock absorber tube (10) via a flange (12), wherein the flange (12) has one or more fluid ducts (13, 14) which fluidically couple the module tube (11) to the shock absorber tube (10),
wherein the flange (12)
- has at least one metallic support cage (15) which forms a retentive connection between the shock absorber tube (10) and the module tube (11), and wherein the flange (12)
- has at least one plastics body (16) in which the at least one fluid duct (13, 14) for the fluidic coupling of the module tube (11) to the shock absorber tube (10) is formed,
**characterized in that** the metallic support cage (15) is a sheet-metal body which is bent into a box shape and which at least partially surrounds the plastics body (16), or **in that** the metallic support cage (15) is at least partially enclosed in the plastics body (16).

2. Shock absorber according to Claim 1, **characterized in that** the fluid ducts (13, 14) are formed by passages (17, 18) in the plastics body (16).

3. Shock absorber according to Claim 2, **characterized in that** sealing elements (19) for sealing the passages (17, 18) are arranged between the plastics body (16) and the shock absorber tube (10) and/or the module tube (11), in particular **in that** the plastics body (16) is designed for receiving sealing elements (19).

4. Shock absorber according to one of the preceding claims, **characterized in that** the fluid ducts (13, 14) are formed by preferably metallic tube elements (20, 21) which are received in the plastics body (16).

5. Shock absorber according to Claim 4, **characterized in that** sealing elements (19) for sealing the transition between the tube elements (20, 21) and the shock absorber tube (10) and/or the module tube (11) are arranged between the tube elements (20, 21) and the shock absorber tube (10) and/or the module tube (11), in particular **in that** the plastics body (16) is designed for receiving sealing elements (19).

6. Shock absorber according to one of the preceding claims, **characterized in that** the metallic support cage (15) is substance-to-substance bonded, in particular welded, to the shock absorber tube (10) and to the module tube (11).

7. Flange (12) for connecting a shock absorber tube (10) to an external module tube (11) of a shock absorber, wherein the flange (12) has one or more fluid ducts (13, 14) by which the module tube (11) can be fluidically coupled to the shock absorber tube (10), **characterized by**
- at least one metallic support cage (15) which forms the retentive connection between the shock absorber tube (10) and the module tube (11), and by
- an injection-moulded plastics body (16) in which the at least one fluid duct (13, 14) for the fluidic coupling of the module tube (11) to the shock absorber tube (10) is formed,
**characterized in that** the metallic support cage (15) is a sheet-metal body which is bent into a box shape and which at least partially surrounds the plastics body (16), or **in that** the metallic support cage (15) is at least partially enclosed in the plastics body (16).

8. Flange (12) according to Claim 7, **characterized in that** the fluid ducts (13, 14) are formed by passages (17, 18) in the plastics body (16).

9. Flange (12) according to Claim 7, **characterized in that** preferably metallic tube elements (20, 21) which form the fluid ducts (13, 14) are arranged in the plastics body (16).

10. Flange (12) according to one of Claims 7 to 9, **characterized in that** the metallic support cage (15) has an edge region (26) or connecting tongues (27) by means of which the support cage (15) can be substance-to-substance bonded to the shock absorber tube (10) and to the module tube (11).

## Revendications

1. Amortisseur comprenant un tube d'amortisseur (10) et un tube modulaire externe (11) qui est relié au tube d'amortisseur (10) par le biais d'une bride (12), la bride (12) présentant un ou plusieurs conduits de fluide (13, 14) qui accouplent fluidiquement le tube modulaire (11) au tube d'amortisseur (10),
la bride (12)
- présentant au moins un panier de support métallique (15) par lequel une liaison de retenue entre le tube d'amortisseur (10) et le tube modulaire (11) est créée, et la bride (12)
- présentant au moins un corps en plastique (16) dans lequel est réalisé l'au moins un conduit de fluide (13, 14) pour l'accouplement fluidique du tube modulaire (11) au tube d'amortisseur (10),
**caractérisé en ce que**
le panier de support métallique (15) est un corps en tôle cintré en forme de caisson qui entoure au moins en partie le corps en plastique (16) ou **en ce que** le panier de support métallique (15) est au moins en partie enfermé dans le corps en plastique (16) .

2. Amortisseur selon la revendication 1, **caractérisé en ce que** les conduits de fluide (13, 14) sont formés par des passages (17, 18) dans le corps en plastique (16).

3. Amortisseur selon la revendication 2, **caractérisé en ce qu'**entre le corps en plastique (16) et le tube d'amortisseur (10) et/ou le tube modulaire (11) sont disposés des éléments d'étanchéité (19) pour étanchéifier les passages (17, 18), en particulier **en ce que** le corps en plastique (16) est réalisé de manière à recevoir des éléments d'étanchéité (19).

4. Amortisseur selon l'une quelconque des revendications précédentes, **caractérisé en ce que** les conduits de fluide (13, 14) sont formés par des éléments tubulaires de préférence métalliques (20, 21) qui sont reçus dans le corps en plastique (16) .

5. Amortisseur selon la revendication 4, **caractérisé en ce qu'**entre les éléments tubulaires (20, 21) et le tube d'amortisseur (10) et/ou le tube modulaire (11) sont disposés des éléments d'étanchéité (19) pour étanchéifier la transition entre les éléments tubulaires (20, 21) et le tube d'amortisseur (10) ou le tube modulaire (11), en particulier **en ce que** le corps en plastique (16) est réalisé de manière à recevoir des éléments d'étanchéité (19).

6. Amortisseur selon l'une quelconque des revendications précédentes, **caractérisé en ce que** le panier de support métallique (15) est connecté par liaison de matière au tube d'amortisseur (10) et au tube modulaire (11), en particulier par soudage.

7. Bride (12) pour relier un tube d'amortisseur (10) à un tube modulaire externe (11) d'un amortisseur, la bride (12) présentant un ou plusieurs conduits de fluide (13, 14) par le biais desquels le tube modulaire (11) peut être accouplé fluidiquement au tube d'amortisseur (10), **caractérisée par**
- au moins un panier de support métallique (15) par lequel est formée la liaison de fixation entre le tube d'amortisseur (10) et le tube modulaire (11), et par
- un corps en plastique moulé par injection (16), dans lequel est réalisé l'au moins un conduit de fluide (13, 14) pour l'accouplement fluidique du tube modulaire (11) au tube amortisseur (10), et
**caractérisée en ce que** le panier de support métallique (15) est un corps en tôle cintré en forme de caisson, qui entoure au moins en partie le corps en plastique (16) ou **en ce que** le panier de support métallique (15) est au moins en partie enfermé dans le corps en plastique (16).

8. Bride (12) selon la revendication 7, **caractérisée en ce que** les conduits de fluide (13, 14) sont formés par des passages (17, 18) dans le corps en plastique (16).

9. Bride (12) selon la revendication 7, **caractérisée en ce que** des éléments tubulaires de préférence métalliques (20, 21) sont disposés dans le corps en plastique (16), par lesquels les conduits fluidiques (13, 14) sont formés.

10. Bride (12) selon l'une quelconque des revendications 7 à 9, **caractérisée en ce que** le panier de support métallique (15) présente une région de bord (26) ou des pattes de connexion (27), avec laquelle ou lesquelles le panier de support (15) peut être assemblé par liaison de matière au tube d'amortisseur (10) et au tube modulaire (11).
